# DEMANDE DE BREVET EUROPEEN

(11) **EP 0 893 568 A2**
(43) Date de publication de la demande: **27.01.1999**
(21) Numéro de dépôt: 98420114.5
(22) Date de dépôt: 06.07.1998
(51) Int. Cl.: E06B 3/48, B60J 5/14

(54) **Porte à panneaux articulés pour fourgons isothermes**

(30) Priorité: 25.07.1997 FR 9709754
(71) Demandeur: Fit Carrosserie, 91540 Fontenay le Vicomte (FR)
(72) Inventeur: Denoual, Daniel, 91700 Saint Genevieve des Bois (FR); Perroux, Maurice, 42100 Saint Etienne (FR)
(74) Mandataire: Dupuis, François

(57) **Abrégé**

Cette porte à panneaux articulés est remarquable en ce que chaque panneau (P1) est formé d'un profil creux rempli de matériau léger et isolant. Chaque panneau constituant la porte, à l'exception des panneaux d'extrémités haut et bas (P1',P1''), présente aux extrémités supérieure et inférieure un profil d'emboîtement mâle (8) - femelle (7) profond, composé de zones curvilignes orientées dans le même sens que la partie courbe (4a) des rails de guidage de la porte, et dimensionnées pour s'épouser étroitement lors de la fermeture de la porte, en assurant une fonction de verrouillage en position alignement des panneaux, tandis qu'elles ne sont plus liées mais conservent un contact ponctuel en position désaccouplée, faisant ainsi fonction d'anti pince-doigts.

## Description

L'invention se rattache au secteur technique des vantaux comprenant un certain nombre de panneaux articulés les uns aux autres par des charnières et des profils de liaison constituant des portes dites 〈〈 sectionnelles 〉〉, utilisables comme portes arrières de fourgons, en particulier fourgons isothermes.

Ce type de porte à panneaux articulés entre eux a fait l'objet de brevets tels que le brevet européen 304.642, le brevet français 2 461 801, le brevet américain 2 557 716 qui décrivent des dispositifs d'articulation des panneaux par charnières et emboîtements.

On connaît aussi par le brevet EP 623.724 la conception de panneaux pour portes sectionnelles agencés pour recevoir des modules clipsables par déformation élastique et permettant une imbrication de formes. Cependant, ce document ne permet nullement de répondre aux besoins et aux contraintes de sollicitation des portes des fourgons isothermes.

Selon l'invention, on a voulu mettre en oeuvre un nouveau concept d'articulation et d'emboîtement des différents panneaux entre eux en assurant une parfaite imbrication et verrouillage en fonction, une étanchéité totale de l'ensemble, un fonctionnement sûr lors des manoeuvres de relevage ou de fermeture, tout en veillant à assurer une fonction anti pince-doigts.

Selon une première caractéristique, la porte à panneaux articulés dite 〈〈 sectionnelle 〉〉 pour portes de fourgons isothermes du type comprenant un certain nombre de panneaux articulés entre eux par des charnières et reliés à des rails de guidage par des galets est caractérisée en ce que chaque panneau est formé d'un profil creux rempli de matériau léger et isolant, chaque panneau constituant la porte, à l'exception des panneaux d'extrémités haut et bas, présente aux extrémités supérieure et inférieure un profil d'emboîtement mâle - femelle profond, composé de zones curvilignes orientées dans le même sens que la partie courbe des rails de guidage de la porte, et dimensionnées pour s'épouser étroitement lors de la fermeture de la porte, en assurant une fonction de verrouillage en position alignement des panneaux, tandis qu'elles ne sont plus liées mais conservent un contact ponctuel en position désaccouplée, faisant ainsi fonction d'anti pince-doigts,
et en ce que chaque profil curviligne mâle-femelle comprend du côté intérieur ou côté de relevage, un secteur en arc de cercle suivi d'un secteur sensiblement en U qui se termine par une languette courbe revenant approximativement au niveau du départ des arcs de cercle,
et en ce que la base du profil d'emboîtement mâle présente du côté extérieur une rainure destinée au logement d'un joint en élastomère dont une partie plane est en contact étroit avec l'extrémité arrondie de la languette courbe du profil curviligne femelle, lors de la fermeture de la porte,
et en ce que les profils desdits panneaux permettent des conserver une zone d'étanchéité et d'isolation maximum des panneaux à l'endroit de leur zone d'articulation et d'imbrication sans rupture thermique

Ces caractéristiques et d'autres encore ressortiront de la description qui suit.

Pour fixer l'objet de l'invention, sans toutefois le limiter, dans les dessins annexés :

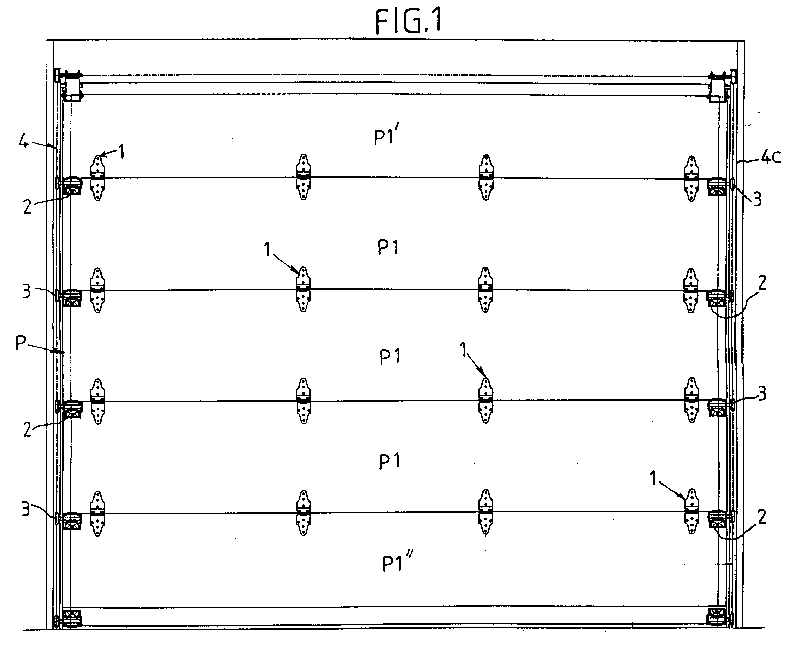

- La figure 1 est une vue de face illustrant une porte relevable à panneaux articulés selon l'invention.

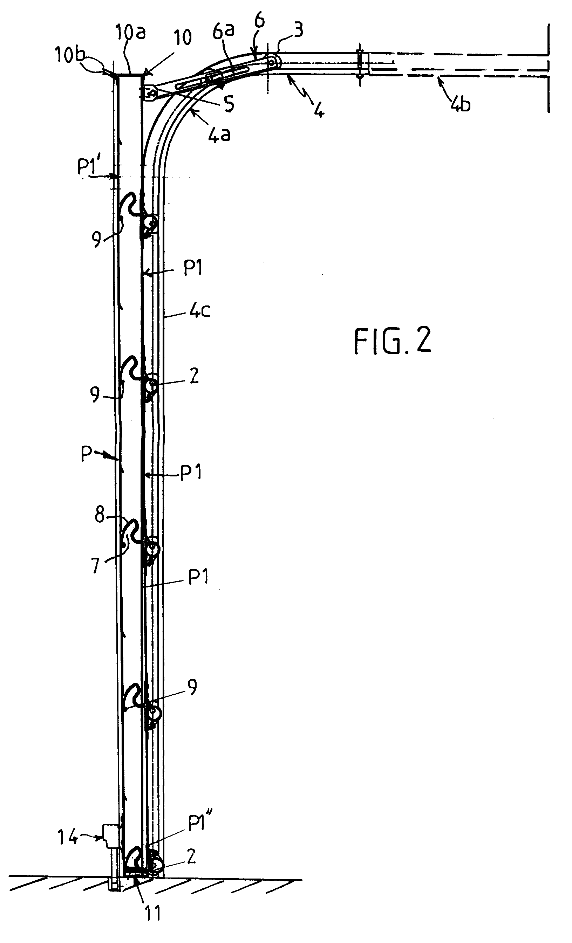

- La figure 2 est une vue en coupe transversale de la porte selon, figure 1.
- La figure 3 est une vue en coupe à plus grande échelle montrant la liaison entre le panneau supérieur et le rail de guidage.
- La figure 4 est une vue en coupe à grande échelle illustrant l'articulation entre deux panneaux consécutifs.
- La figure 5 est une vue partielle du côté interne montrant le moyen de fermeture et de verrouillage de la porte.
- La figure 6 est une vue en coupe à grande échelle illustrant le montage du joint d'étanchéité sur le panneau inférieur.

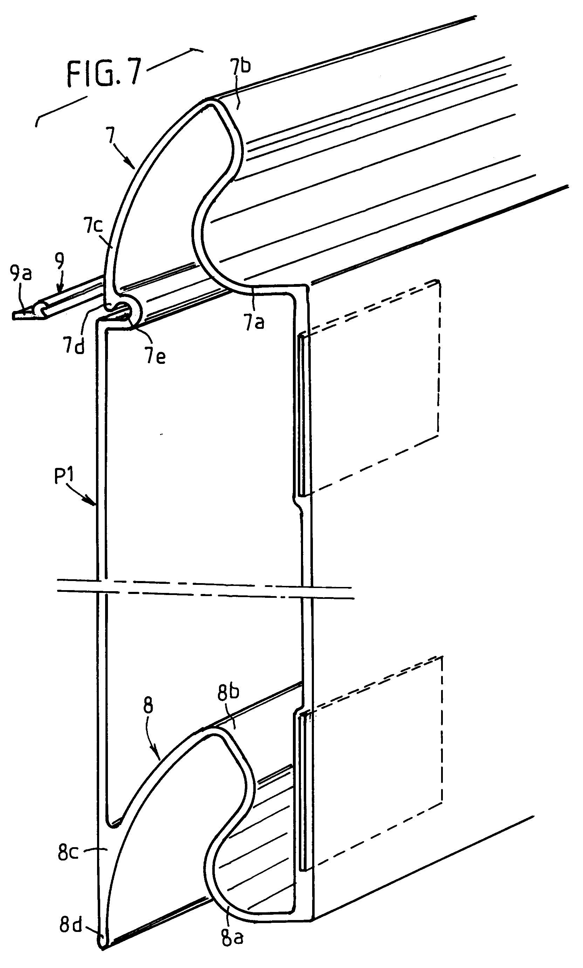

- La figure 7 est une vue en perspective montrant un panneau selon l'invention avec son joint d'étanchéité séparé.

Afin de rendre plus concret l'objet de l'invention, on le décrit maintenant sous une forme non limitative de réalisation illustrée aux figures des dessins

La porte (P) décrite et illustrée est du type dite 〈〈 sectionnelle 〉〉, c'est-à-dire composée de panneaux (P1) articulés entre eux par des charnières (1) et présentant, aux extrémités desdits panneaux, des supports (2) à galets (3) destinés à coopérer avec des rails de guidage (4), en vue du relevage de la porte soit manuellement, soit à l'aide d'un organe moteur (non représenté). Le panneau supérieur est quant à lui, relié en (5) aux rails par des biellettes articulées (6) à deux galets (3) dont l'un peut coulisser dans une lumière (6a).

On comprend que lors du relevage, les galets (3) vont successivement rouler dans la partie courbe (4a) des rails reliant les parties verticale (4b) et horizontale (4c).

Dans ce mouvement, chaque panneau de la porte va se désaccoupler de son prédécesseur et pour cela, les extrémités inférieure et supérieure de chacun des panneaux doivent être agencées pour assurer un accouplement et un désaccouplement parfait, en toute sécurité pour l'utilisateur.

Pour cela, et selon une caractéristique importante de l'invention, chaque panneau (P1) formé d'un profilé creux rempli de matériau léger et isolant (M) du type mousse de polyuréthane par exemple, présente aux deux extrémités un profil d'emboîtement particulier, à savoir : un profil d'emboîtement mâle (7) à l'extrémité supérieure et un profil d'emboîtement femelle (8) à l'extrémité inférieure.

Les deux profils sont curvilignes et orientés dans le même sens que la partie courbe (4a) des rails, afin qu'ils assurent le désaccouplement ou l'accouplement progressif des panneaux entre eux. Dans le détail, les profils curvilignes présentent du côté intérieur ou côté du relevage, un secteur en arc de cerce (7a-8a), suivi d'un secteur sensiblement en U (7b-8b) qui se termine par une languette courbe (7c-8c) revenant approximativement au niveau du départ des arcs de cercle. La languette (7c) forme un bec arrondi (7d) se prolongeant intérieurement par une rainure (7e) destinée au logement d'un joint d'étanchéité en élastomère (9), tandis que l'extrémité (8d) de la languette (8c) est arrondie pour venir comprimer sans blesser, la zone plane (9a) du joint en fin d'accouplement de deux panneaux en assurant ainsi une étanchéité parfaite.

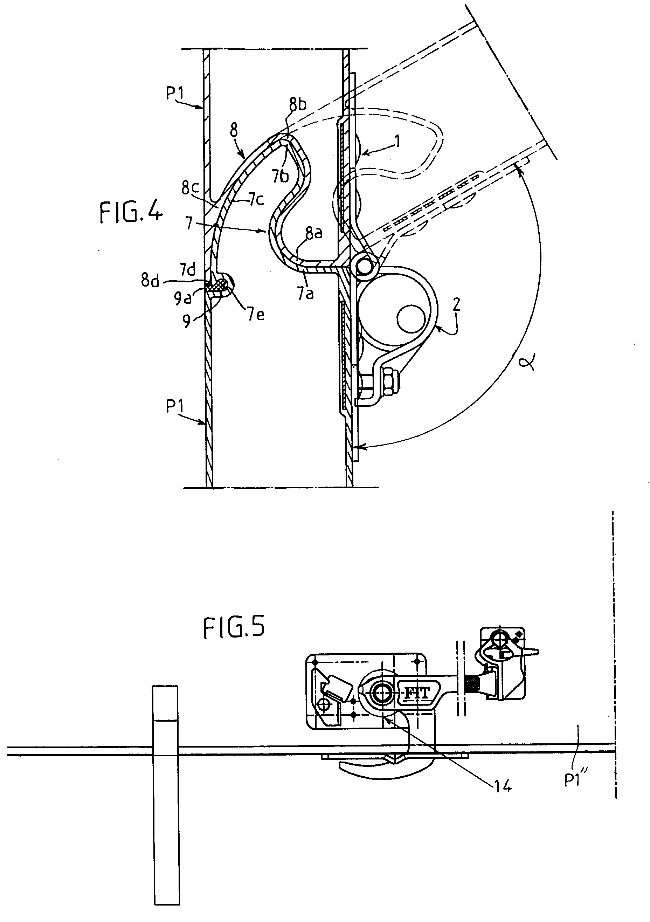

La profondeur des profils curvilignes et, notamment celle des parties (7b-8b), est déterminée pour qu'il y ait désaccouplement des deux panneaux successifs articulés à 120°, comme l'indique l'angle (α) figure 4, avec cependant, l'extrémité (8d) de la languette (8c) en contact avec l'entrée ou sommet du secteur en U (8b). De même, ces profils profonds assurent un accouplement ou emboîtement précis.

D'autre part, on souligne que ces formes complémentaires judicieusement imbriquées entre eux, avec un aspect extérieur parfaitement lisse et évitant le pincement inopiné des doigts d'un utilisateur. En outre, après montage, les panneaux se trouvant dans un plan d'alignement se trouvent auto verrouillés l'un par rapport à l'autre, seul le basculement de l'un permettant le désengagement de l'autre.

Enfin, par ces formes particulières, on conserve une zone d'étanchéité et d'isolation maximum des panneaux à l'endroit de leur zone d'articulation et d'imbrication, cela sans rupture thermique. La conformation des panneaux et de leur profit permet d'obtenir une meilleure répartition des sections de remplissage de matériau isolant.

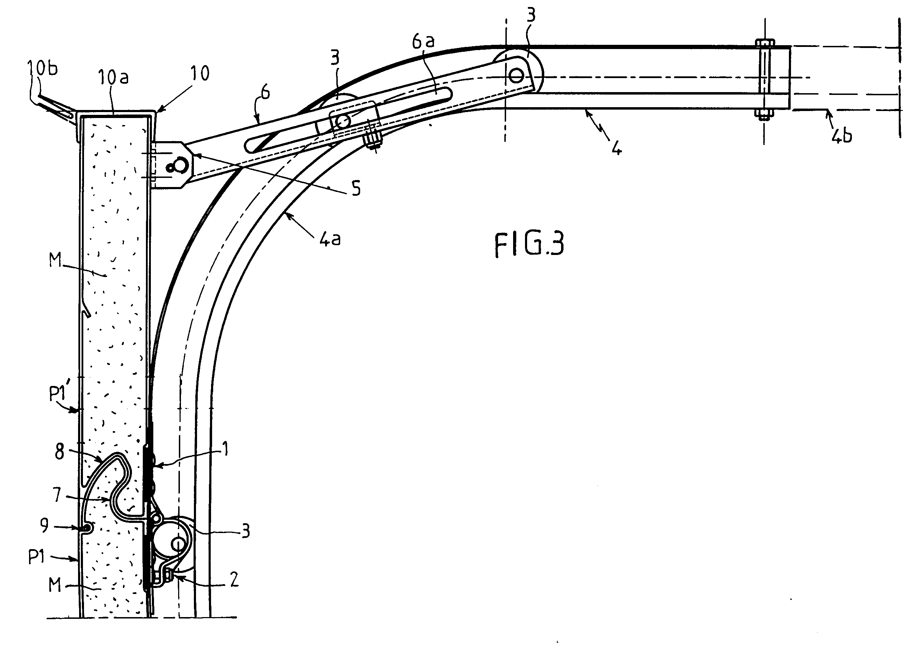

Comme on le voit notamment figure 3, le panneau supérieur (P1') présente seulement un profil curviligne inférieur femelle (8), tandis que son extrémité supérieure est plane et reçoit un joint d'étanchéité (10) le coiffant par sa base (10a) et présentant deux lamelles souples (10b) de coopération par écrasement contre l'encadrement supérieur de la porte.

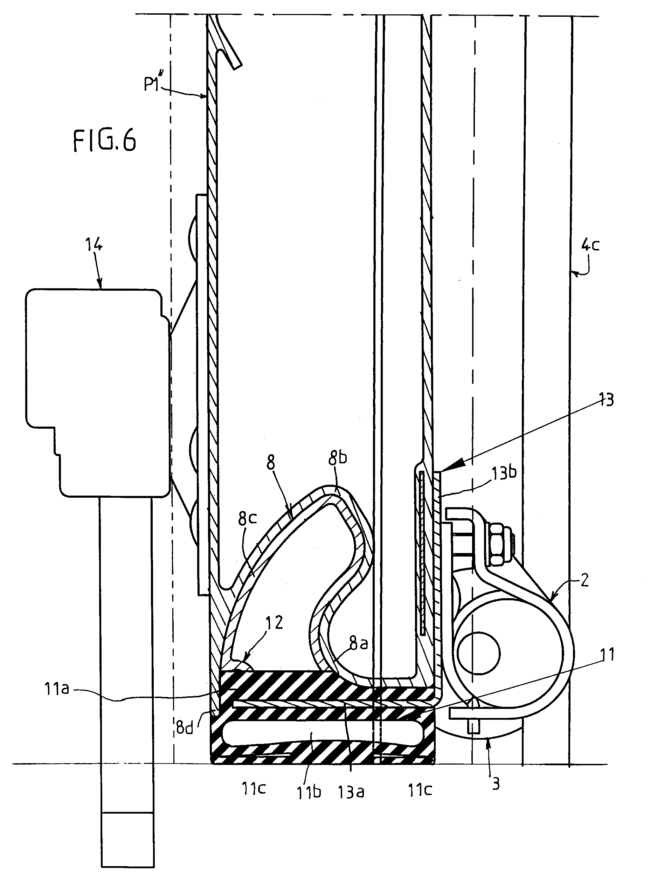

De même, le profil curviligne femelle (8) du panneau inférieur (P1'') reçoit un joint d'étanchéité (11) en élastomère comprenant soit un profil complémentaire d'encastrement soit, comme illustré à la figure 6, un clip indépendant (12), tandis que le corps proprement dit (11a) du joint est traversé par la branche horizontale (13a) d'une équerre (13) dont l'autre branche vertical (13b) est fixée par le support (2) de galet (3). La partie inférieure du joint forme un cavité (11b) déformable lorsque la porte est en position de fermeture maximum en écrasant deux lèvres (11c) d'appui au sol.

A noter encore, comme illustré aux figures 5 et 6, qu'un moyen de fermeture (14) de la porte de type connu, est assujetti au panneau inférieur (P1'').

Les avantages ressortent bien de la description, on souligne encore :
- le fonctionnement doux de la porte grâce aux profils judicieux des liaisons articulées et des profils de coopération ;
- l'étanchéité parfaite aux éléments (air, eau...) par les profils mis en oeuvre, et les joints d'étanchéité ;
- la fonction anti pince-doigts obtenue par la configuration des panneaux ainsi articulés ;
- l'isolation maximum des panneaux sans rupture thermique.
- le verrouillage en partie des panneaux en position alignée ;
- l'aspect extérieur lisse de la porte ainsi réalisée ;
- la réalisation simple ne nécessitant pas d'outillages complexes pour sa mise en oeuvre.

## Revendications

1. Porte à panneaux articulés dite 〈〈 sectionnelle 〉〉 pour portes de fourgons du type comprenant un certain nombre de panneaux (P1) articulés entre eux par des charnières (1) et reliés à des rails de guidage (4) par des galets (3), **caractérisée en ce que** chaque panneau est formé d'un profil creux rempli de matériau léger et isolant,
**et en ce que** chaque panneau constituant la porte, à l'exception des panneaux d'extrémités haut et bas (P1', P1''), présente aux extrémités supérieure et inférieure un profil d'emboîtement mâle (8) - femelle (7) profond, composé de zones curvilignes orientées dans le même sens que la partie courbe (4a) des rails de guidage de la porte, et dimensionnées pour s'épouser étroitement lors de la fermeture de la porte, en assurant une fonction de verrouillage en position alignement des panneaux, tandis qu'elles ne sont plus liées mais conservent un contact ponctuel en position désaccouplée, faisant ainsi fonction d'anti pince-doigts,
**et en ce que** chaque profil curviligne mâle-femelle (7-8) comprend du côté intérieur ou côté de relevage, un secteur en arc de cercle (7a-8a) suivi d'un secteur sensiblement en U (7b-8b) qui se termine par une languette courbe (7c-8c) revenant approximativement au niveau du départ des arcs de cercle,
**et en ce que** la base du profil d'emboîtement mâle (7) présente du côté extérieur une rainure (7e) destinée au logement d'un joint en élastomère (9) dont une partie plane (9a) est en contact étroit avec l'extrémité arrondie (8d) de la languette courbe (8c) du profil curviligne femelle (8), lors de la fermeture de la porte,
**et en ce que** les profils desdits panneaux permettent de conserver une zone d'étanchéité et d'isolation maximum des panneaux à l'endroit de leur zone d'articulation et d'imbrication sans rupture thermique.

2. Porte selon la revendication 1, **caractérisée en ce que** le panneau extrême inférieur (P1'') présente un profil d'emboîtement femelle (8) dans lequel est logé un joint d'étanchéité (11) tu type à lèvres déformables (11c),
**et en ce que** le corps (11a) du joint d'étanchéité (11) est disposé en appui sous le profil curviligne (8) et traversé par la branche horizontale (13a) d'une équerre (13) dont la branche verticale (13b) est fixée entre la paroi interne du panneau (P1'') et un support (2) des galets de guidage (3), un clip (12) étant alors inséré dans le secteur en U (8b) du profil curviligne femelle (8),
**et en ce que** le corps (11a) du joint d'étanchéité (11) présente une cavité déformable (11b) entre la branche horizontale (13a) de l'équerre de fixation (13) et les lèvres déformables (11c).

3. Porte selon la revendication 1, **caractérisée en ce que** la face supérieure plane du panneau extrême supérieur (P1') est coiffée d'un joint d'étanchéité (10) à deux lamelles souples (10b) de coopération avec l'encadrement supérieur de la porte.
